(19) **Europäisches Patentamt / European Patent Office / Office européen des brevets**

(11) **EP 2 133 226 B1**

(12) **FASCICULE DE BREVET EUROPEEN**

(45) Date de publication et mention
de la délivrance du brevet:
**04.05.2016 Bulletin 2016/18**

(51) Int Cl.:
**B60H 1/32** *(2006.01)* **F25B 49/00** *(2006.01)*
**F25B 1/00** *(2006.01)*

(21) Numéro de dépôt: **09161645.8**

(22) Date de dépôt: **02.06.2009**

(54) **Procédé d'estimation de la puissance absorbée par un compresseur au démarrage d'une installation de climatisation**

Verfahren zur Schätzung der Leistungsaufnahme eines Kompressors für eine Kühlflüssigkeit beim Starten einer Klimaanlage.

Estimating method for the consumed power of a compressor for refrigerant fluid at the start of an air-conditioning installation

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.06.2008 FR 0803187**

(43) Date de publication de la demande:
**16.12.2009 Bulletin 2009/51**

(73) Titulaire: **Valeo Systèmes Thermiques
78321 Le Mesnil Saint Denis (FR)**

(72) Inventeur: **Yahia, Mohamed
75005, PARIS (FR)**

(74) Mandataire: **Léveillé, Christophe
Valeo Systemes Thermiques
Service Propriété Industrielle
Branche Thermique Habitacle
8, rue Louis Lormand
La Verrière BP 513
78321 Le Mesnil-Saint-Denis Cedex (FR)**

(56) Documents cités:
EP-A- 1 808 318    FR-A- 2 840 259
FR-A- 2 852 558    FR-A- 2 862 573

• HABERSCHILL ET AL: "Comportement dynamique d'une pompe a chaleur au CO2 en cycles sous critique et transcritique" INTERNATIONAL JOURNAL OF REFRIGERATION, ELSEVIER, PARIS, FR, vol. 30, no. 4, 1 mai 2007 (2007-05-01), pages 732-743, XP022054896 ISSN: 0140-7007
• KIM S G ET AL: "The performance of a transcritical CO2 cycle with an internal heat exchanger for hot water heating" INTERNATIONAL JOURNAL OF REFRIGERATION, ELSEVIER, PARIS, FR, vol. 28, no. 7, 1 novembre 2005 (2005-11-01), pages 1064-1072, XP025278299 ISSN: 0140-7007 [extrait le 2005-11-01]

**EP 2 133 226 B1**

**Description**

La présente invention concerne un procédé d'estimation de la puissance absorbée par un compresseur de fluide frigorigène d'un système de climatisation lors du démarrage de cette installation de climatisation.

L'invention trouve une application particulièrement avantageuse dans le domaine de la climatisation à l'intérieur de l'habitacle des véhicules automobiles.

Dans les véhicules à moteur classiques, le compresseur du circuit de climatisation est entraîné par le moteur et consomme donc une partie de la puissance fournie par ce dernier au détriment de la puissance disponible pour le roulage du véhicule. Bien qu'elle ne soit pas très Importante, la puissance absorbée par le compresseur lorsqu'il est en marche n'en réduit pas moins le rendement du moteur. Cette diminution de rendement a pour conséquence d'augmenter la consommation de carburant et la pollution générée par les gaz d'échappement du véhicule.

Pour optimiser le rendement du moteur, une solution consiste à estimer la puissance réellement absorbée par le compresseur. En effet, la connaissance de cette information permet à une unité centrale de gestion du véhicule d'adapter un certain nombre de paramètres aux besoins réels, notamment les paramètres d'injection du moteur, ainsi que ceux du groupe moto-ventilateur (GMV) impliqué dans le refroidissement du fluide frigorigène à la sortie du compresseur.

Le document HABERSCHILL et AL édité dans la revue INTERNATIONAL JOURNAL OF REFRIGERATION, en mai 2007, décrit aux pages 732 à 743, une méthode de détermination d'une puissance absorbée par un compresseur.

Dans ce contexte, la demande de brevet français n° 2 840 259 propose d'estimer la puissance $\dot{W}_{sh}$ absorbée par le compresseur à partir du débit massique $\dot{m}_{rcpr}$ du fluide réfrigérant comprimé par le compresseur, ces deux grandeurs étant reliées par une expression de la forme : $\dot{W}_{sh}=a.\dot{m}_{rcpr}.W_{is}+b.N$, où $W_{is}$ est le travail de compression isentropique du compresseur, N la vitesse de rotation du compresseur, et $a$ et $b$ des paramètres caractéristiques du compresseur.

En fait, dans la demande brevet précitée, le débit massique $\dot{m}_{rcpr}$ dans le compresseur n'est pas estimé en tant que tel mais approché par le débit massique $\dot{m}_{r\,exp}$ du fluide frigorigène dans l'organe de détente de l'installation de climatisation. La raison pour cela est que le débit massique $\dot{m}_{r\,exp}$ dans l'organe de détente, outre des caractéristiques propres à l'organe de détente lui-même, est fonction de grandeurs thermodynamiques facilement mesurables qui sont la température $T_{exp\,in}$ du fluide frigorigène à l'entrée de l'organe de détente et les pressions $P_{exp\,in}$ et $P_{expout}$ du fluide frigorigène respectivement à l'entrée et la sortie de l'organe de détente. La demande de brevet français n° 2 840 259 fournit en détail les relations entre ces différents paramètres.

Ce modèle, qui suppose l'égalité entre les deux débits massiques $\dot{m}_{r\,exp}$ et $\dot{m}_{rcpr}$, est valable en régime stationnaire ou dans des régimes faiblement transitoires. Par contre, il n'est plus applicable lors de variations rapides du débit du compresseur, en particulier au démarrage de l'installation de climatisation. Dans ce cas en effet, on observe, d'une part, que la différence des pressions $P_{exp\,in}$ et $P_{exp\,out}$ au niveau de l'organe de détente est très faible, d'où un débit massique $\dot{m}_{r\,exp}$ quasi nul, voire nul, alors que, d'autre part, la variation de la pression dans le circuit haute pression, situé entre la sortie du compresseur et l'entrée de l'organe de détente, augmente de manière brutale, ce qui indique un terme d'accumulation de masse non négligeable. Dans ces conditions, le débit massique $\dot{m}_{rcpr}$ du compresseur ne peut plus être assimilé au débit massique $\dot{m}_{r\,exp}$ de l'organe de détente. On peut même écrire que $\dot{m}_{rcpr}$ est bien supérieur à $\dot{m}_{r\,exp}$. L'estimation de la puissance absorbée par le compresseur devient alors complètement erronée.

Or, il y a avantage à pouvoir continuer à fournir une estimation de la puissance absorbée par le compresseur aussi précise que possible durant toute la phase de démarrage, même si elle est relativement courte. Cette avantage réside dans le fait qu'on évite tous à-coups sur le moteur consécutif à la mise en marche et à l'arrêt intempestif du compresseur. Le confort est donc amélioré.

Aussi, un but de l'invention est de proposer un procédé qui permettrait d'estimer avec une bonne précision la puissance absorbée par le compresseur au démarrage de l'installation de climatisation.

Ce but est atteint, conformément à l'invention, grâce à un procédé d'estimation de la puissance $\dot{W}_{sh}$ absorbée par un compresseur de fluide réfrigérant au démarrage d'une installation de climatisation, ladite installation comprenant un circuit dit haute pression situé entre la sortie du compresseur et l'entrée d'un organe de détente du fluide réfrigérant, remarquable en ce que ledit procédé comprend les étapes consistant, après démarrage de l'installation de climatisation, à :

(a) calculer la dérivée $dHP/dt$ des variations de la haute pression $HP$ du fluide réfrigérant dans le circuit haute pression, et en déduire une valeur $\delta\dot{m}_r$ de la variation correspondante du débit massique du fluide frigorigène dans le circuit haute pression,

(b) estimer le débit massique $\dot{m}_{r\,exp}$ du fluide réfrigérant dans ledit organe de détente, et en déduire le débit massique $\dot{m}_{rcpr}$ du fluide réfrigérant dans le compresseur par la relation : $\dot{m}_{rcpr}=\dot{m}_{r\,exp}+\delta\dot{m}_r$,

(c) estimer la puissance absorbée $\dot{W}_{sh}$ par le compresseur à partir du débit massique $\dot{m}_{rcpr}$.

2

Ainsi, comme on le verra en détail plus loin, le procédé conforme à l'invention fait usage d'un modèle dynamique faisant le bilan de la masse de fluide réfrigérant dans le circuit haute pression de l'installation de climatisation, de manière à obtenir une bonne estimation du débit massique $\dot{m}_{rcpr}$ du compresseur en corrigeant le débit massique $\dot{m}_{r\,exp}$ de l'organe de détente de la quantité $\delta\dot{m}_r$ évaluée à partir des variations de la pression $HP$ dans le circuit haute pression durant la phase de démarrage.

De manière avantageuse, le procédé met en oeuvre les étapes (a) à (c) pendant une durée donnée $T_0$ de l'ordre de quelques secondes, par exemple pendant une fourchette de temps comprise entre trois et cinq secondes.

Selon un mode de réalisation particulier, le procédé conforme à l'invention comprend une étape préalable consistant à comparer, après démarrage de l'installation de climatisation, la valeur $HP(t)$ de la pression du fluide réfrigérant dans le circuit haute pression à la valeur $HP(0)$ au démarrage de l'installation, et à effectuer les étapes (a) à (c) à partir d'un instant initial $t_s$ pour lequel la différence $HP(t_s)-HP(t_s-\delta t)$ est supérieure à un seuil donné $\Delta HP_0$.

De cette manière, on s'assure, avant de mettre en oeuvre les étapes (a) à (c) du procédé, que l'augmentation constatée de la pression $HP$ est bien représentative du démarrage de l'installation de climatisation et non pas due à des phénomènes fortuits.

L'invention prévoit en outre que les étapes (a) à (c) sont effectuées pendant une durée donnée $T_0$ après ledit instant initial $t_s$. Cette durée $T_0$ est limitée à la période de temps pendant laquelle le modèle dynamique de bilan de masse mentionné plus haut est valable, c'est-à-dire quelques secondes en pratique.

Enfin, l'invention propose d'utiliser pour le fluide frigorigène une équation d'état de la forme $P=\rho_r RT$, où $\rho_r$ est la masse volumique du fluide, de sorte que la variation $\delta\dot{m}_r$ du débit massique est reliée à la dérivée $dHP/dt$ par la relation : $\delta\dot{m}_r = A.dHP/dt$, où $A = V_{HP}/RT$, $V_{HP}$ et $T$ étant le volume et la température du circuit haute pression, et R une constante du fluide frigorigène. Il suffit donc déterminer et de stocker dans une base de données les valeurs du paramètre $A$ pour obtenir très simplement une estimation de la correction $\delta\dot{m}_r$ cherchée.

Il faut également signaler que l'invention s'applique tout aussi bien aux installations de climatisation comprenant un condenseur et un organe de détente à orifice de section fixe qu'aux installations plus spécialement dédiées aux fluides réfrigérants supercritiques, comprenant un refroidisseur de gaz, un échangeur de chaleur interne et un organe de détente à orifice de section variable.

La description qui va suivre en regard des dessins annexés, donnés à titres d'exemples non limitatifs, fera bien comprendre en quoi consiste l'invention et comment elle peut être réalisée.

La figure 1 est un schéma d'une installation de climatisation apte à mettre en oeuvre le procédé conforme à l'invention.

La figure 2 est un organigramme des différentes étapes du procédé conforme à l'invention.

La figure 3 est un graphe donnant en fonction du temps les variations du couple du compresseur mesuré (A), estimé (B) par le procédé de l'art antérieur et estimé (C) par le procédé conforme à l'invention.

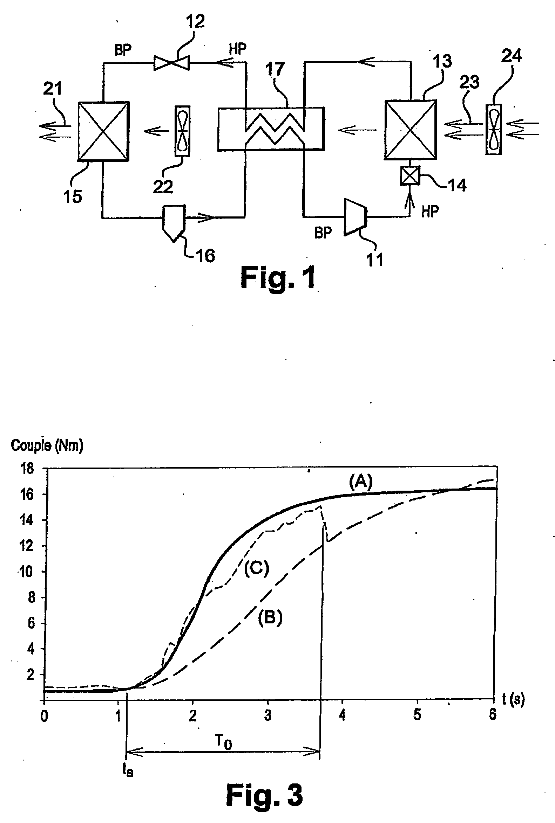

Sur la figure 1 est représentée une installation de climatisation comprenant un circuit dit haute pression situé entre la sortie d'un compresseur 11 de fluide frigorigène et l'entrée d'un organe 12 de détente. On notera $HP$ la pression régnant dans le circuit haute pression. La sortie de l'organe 12 de détente et l'entrée du compresseur 11 définissent un circuit dit basse pression de l'installation. La pression dans le circuit basse pression sera notée $BP$. Bien que cela ne soit pas essentiel pour l'invention, l'installation de la figure 1 concerne plus particulièrement un fluide réfrigérant supercritique comme le dioxyde de carbone $CO_2$. Dans ce cas, l'organe 12 de détente est généralement constitué par un orifice de section variable.

Le fluide réfrigérant à la pression $BP$ reçu du circuit basse pression sous forme gazeuse est porté à la haute pression $HP$ par le compresseur 11. Dans le cas du dioxyde de carbone ($CO_2$), la basse pression $BP$ est par exemple de l'ordre de 30 à 40 bars, la haute pression $HP$ pouvant atteindre des valeurs de l'ordre de 90-133 bars.

Un refroidisseur 13 de gaz (connu sous le terme anglo-saxon de « gas cooler ») permet de refroidir, à pression sensiblement constante $HP$, le fluide réfrigérant comprimé à l'état gazeux par le compresseur 11. Dans le mode de réalisation de la figure 1, la haute pression $HP$ est mesurée à l'entrée du refroidisseur 13 par un capteur 14. Le fluide frigorigène est refroidi dans le refroidisseur 13 par échange thermique avec un flux d'air extérieur 23 mis en mouvement par l'avancement du véhicule ou, éventuellement, au moyen d'un groupe moto-ventilateur (GMV) 24.

L'organe 12 de détente a pour effet de faire passer la pression du fluide frigorigène provenant du refroidisseur 13 de la haute pression $HP$ à la basse pression $BP$ en l'amenant, au moins en partie, à l'état liquide. Cette détente s'accompagne d'une diminution de la température du fluide frigorigène.

L'air 21 de climatisation destiné à être envoyé vers l'habitacle du véhicule est refroidi par échange thermique dans un évaporateur 15 avec le fluide réfrigérant provenant de l'organe 12 de détente. Le flux d'air 21 de climatisation est produit par un pulseur 22 alimenté par l'air extérieur ou en partie venant de l'habitacle (recyclage partiel ou total). Dans l'évaporateur 15, le fluide frigorigène passe, à pression sensiblement constante $BP$, de l'état liquide à un état au moins partiellement gazeux. Un accumulateur 16 disposé en sortie de l'évaporateur 15 permet la séparation du liquide.

On peut voir sur la figure 1 la présence dans l'installation de climatisation d'un échangeur thermique interne 17 permettant au fluide frigorigène à haute température circulant du refroidisseur 13 vers l'organe 12 de détente de céder de la chaleur au fluide à plus basse température circulant de l'évaporateur 15 vers le compresseur 11. L'échange de chaleur ainsi réalisé présente l'avantage d'améliorer le rendement de la boucle de climatisation effectuée par le fluide réfrigérant. Il faut cependant noter que l'utilisation d'un échangeur thermique interne n'est pas indispensable à l'invention, même si elle présente des avantages notamment dans le cas de fluides réfrigérants supercritiques.

Comme cela a été mentionné plus haut, l'estimation de la puissance $\dot{W}_{sh}$ absorbée par le compresseur 11 nécessite de connaître l'information de débit massique $\dot{m}_{rcpr}$ du fluide réfrigérant dans le compresseur 11.

En régime permanent ou faiblement transitoire, ce débit massique $\dot{m}_{rcpr}$ peut être approché avec une bonne précision par le débit massique $\dot{m}_{r\,exp}$ du fluide dans l'organe 12 de détente.

Cependant, au démarrage de l'installation de climatisation, la différence entre les pressions $P_{exp\,in}$ et $P_{espout}$ en entrée et en sortie de l'organe 12 de détente est très faible, voire nulle, de sorte que le débit massique $\dot{m}_{r\,exp}$ est également très faible, voire nul, puisque proportionnel à $\sqrt{P_{exp\,in} - P_{exp\,out}}$, alors que, par ailleurs et dans le même temps, le débit massique $\dot{m}_{rcpr}$ du compresseur 11 dans le circuit haute pression est non négligeable. Il est donc impératif d'apporter une correction $\delta\dot{m}_r$ au débit massique $\dot{m}_{r\,exp}$ de manière à pouvoir estimer le débit massique $\dot{m}_{rcpr}$ cherché par la relation : $\dot{m}_{rcpr} = \dot{m}_{r\,exp} + \delta\dot{m}_r$.

Pour cela, on utilise un modèle dynamique de bilan de masse qui va maintenant être présenté.

Ce modèle repose sur l'idée qu'au démarrage de l'installation où le débit massique $\dot{m}_{rcpr}$ du compresseur 11 est non nul et le débit massique $\dot{m}_{r\,exp}$ de l'organe 12 de détente quasi nul, il se produit dans le circuit haute pression une accumulation de masse engendrant un variation temporelle rapide de la haute pression $HP$. Cette accumulation de masse étant directement reliée à la différence $\delta\dot{m}_r$ entre les débits $\dot{m}_{rcpr}$ et $\dot{m}_{r\,exp}$, il existe une relation $\delta\dot{m}_r = f(dHP/dt)$ entre les variations temporelles du débit massique différentiel $\delta\dot{m}_r$ et la dérivée par rapport au temps $t$ de la haute pression $HP$. Il suffit donc, après avoir établi une loi $f$ d'accumulation de masse, de mesurer la pression $HP$ au cours du temps et d'en calculer la dérivée pour obtenir une estimation de la correction $\delta\dot{m}_r$ à appliquer au débit massique $\dot{m}_{r\,exp}$ et en déduire ainsi le débit massique $\dot{m}_{rcpr}$ cherché pour le compresseur 11.

A titre d'exemple, on peut prendre pour le fluide réfrigérant l'équation d'état suivante : $P = \rho_r RT$ où $\rho_r$ est la masse volumique du fluide et $R$ une constante caractéristique du fluide qui dépend de la pression $P$ et de la température $T$.

Si on appelle $V_{HP}$ le volume du circuit haute pression, on peut écrire : $\delta\dot{m}_r = \dot{m}_{rcpr} - \dot{m}_{r\,epx} = V_{HP}.d\rho_r/dt$.

En utilisant l'équation d'état ci-dessus, on obtient : $\delta\dot{m}_r = (V_{HP}/RT).dHP/dt$ qui représente la loi d'accumulation de masse dans le circuit haute pression. On posera $A = V_{HP}/RT$.

La haute pression $HP$ étant mesurée par le capteur 14 à l'entrée du refroidisseur 13 de gaz et la température $T$ étant prise par exemple égale à la température ambiante, on en déduit les valeurs de la dérivée $dHP/dt$ et donc celles de $\delta\dot{m}_r$, le volume $V_{HP}$ étant connu de même que la constante $R$.

Le tableau ci-dessous donne un certain nombre de valeurs typiques des différents paramètres pour le dioxyde de carbone ($CO_2$) comme fluide réfrigérant.

| $HP$ (bar) | $T$ (°C) | $\rho_r$ (kg/m³) | $RT$ (Pa/kg/ m³) | $V_{HP}$ (dm³) | $A$ (kg/Pa) |
|---|---|---|---|---|---|
| 40 | 30 | 90 | 44602 | 0,35 | $7{,}8.10^{-9}$ |
| 50 | 30 | 134 | 40367 | 0.35 | $8{,}7.10^{-9}$ |
| 60 | 35 | 158 | 37859 | 0,35 | $9{,}2.10^{-9}$ |
| 70 | 40 | 198 | 35428 | 0,35 | $9{,}9.10^{-9}$ |
| 80 | 40 | 278 | 28743 | 0,35 | $1{,}2.10^{-9}$ |
| 90 | 45 | 339 | 26562 | 0,35 | $1{,}3.10^{-9}$ |

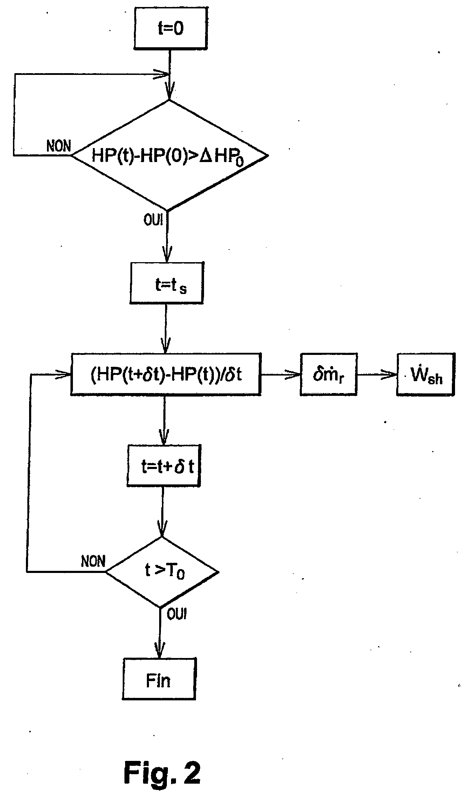

L'organigramme de la figure 2 montre comment le procédé conforme à l'invention est mis en oeuvre pratiquement.

A l'instant $t=0$ où l'installation de climatisation démarre, le capteur 14 de pression est mis en en fonctionnement et fournit des valeurs $HP(t)$ de la haute pression au cours du temps selon un pas de mesure $\delta t$.

Dans une étape préalable au procédé proprement dit, les valeurs $HP(t)$ de la haute pression sont comparées à la valeur de démarrage $HP(0)$ jusqu'à ce que, à un instant donné noté $t_s$, la différence $HP(t_s) - HP(t_s - \delta t)$ dépasse un seuil $\Delta HP_0$ donné. La valeur du seuil $\Delta HP_0$ est fixée de manière qu'au-delà de cette valeur les variations de la haute pression $HP$ puissent être considérées comme significatives, c'est-à-dire effectivement produites par un débit du compresseur 11. En pratique, pour une valeur du seuil $\Delta HP_0$ de l'ordre de **2** bar si $\delta t$ est d'environ 0.1 seconde.

A partir de l'instant $t_s$, la dérivée $dHP/dt$ est calculée à chaque pas $\delta t$ de mesure par la formule $(HP(t+\delta t) - HP(t))/\delta t$. On en déduit la valeur de la correction $\delta\dot{m}_r$ en appliquant la loi d'accumulation de masse établie plus haut. Enfin, le débit massique $\dot{m}_{rcpr}$ cherché est donné par $\dot{m}_{rcpr} = \dot{m}_{r\,exp} + \delta\dot{m}_r$, le débit massique $\dot{m}_{r\,exp}$ dans l'organe 12 de détente étant estimé par toute technique connue, notamment celle décrite dans la demande de brevet français n° 2 840 259.

Finalement, la puissance $\dot{W}_{sh}$ absorbée par le compresseur 11 peut être estimée à chaque pas de mesure $\delta t$ par une relation du type $W_{sh} = a.\dot{m}_{rcpr}.W\,is + b.N$, où $W_{is}$ est le travail de compression isentropique du compresseur, $N$ la vitesse de rotation du compresseur, et $a$ et $b$ des paramètres caractéristiques du compresseur.

Le procédé se déroule ainsi pendant une durée $T_0$ au-delà de laquelle le modèle dynamique de bilan de masse n'est plus applicable du fait que l'organe 12 de détente débite du fluide réfrigérant, mettant fin au régime d'accumulation de masse dans le circuit haute pression. La durée $T_0$ est de l'ordre de quelques secondes, 3 secondes par exemple.

La demanderesse a testé sur un exemple réel le procédé d'estimation qui vient d'être décrit et a obtenu les résultats résumés sur le graphe de la figure 3 qui donne les variations au cours du temps, après l'instant $t=0$ de démarrage de l'installation de climatisation, du couple fourni par le compresseur 11, la puissance absorbée étant directement liée au couple développé.

La courbe (A) correspond au couple mesuré, la courbe (B) au couple estimé selon un modèle classique de régime stationnaire et la courbe (C) au couple estimé selon le procédé conforme à l'invention prenant en compte le phénomène d'accumulation de masse au démarrage. On voit clairement sur ce graphe que le procédé de l'invention conduit à une réduction significative de l'erreur introduite par le modèle utilisé dans l'art antérieur puisque la courbe (C) illustrant l'invention est plus proche de la courbe mesuré (A), c'est-à-dire l'état réel du compresseur, que la courbe (B).

**Revendications**

1. Procédé d'estimation de la puissance $\dot{W}_{sh}$ absorbée par un compresseur (11) de fluide réfrigérant au démarrage d'une installation de climatisation, ladite installation comprenant un circuit dit haute pression situé entre la sortie du compresseur (11) et l'entrée d'un organe (12) de détente du fluide réfrigérant, **caractérisé en ce que** ledit procédé comprend les étapes consistant, après démarrage de l'installation de climatisation, à :

   (a) calculer la dérivée $dHP/dt$ des variations de la pression $HP$ du fluide réfrigérant dans le circuit haute pression, et en déduire une valeur $\delta\dot{m}_r$ de la variation correspondante du débit massique du fluide réfrigérant dans le circuit haute pression,
   (b) estimer le débit massique $\dot{m}_{r\,exp}$ du fluide réfrigérant dans ledit organe (12) de détente, et en déduire le débit massique $\dot{m}_{rcpr}$ du fluide réfrigérant dans le compresseur (11) par la relation $\dot{m}_{rcpr} = \dot{m}_{r\,epx} + \delta\dot{m}_r$,
   (c) estimer la puissance absorbée $\dot{W}_{sh}$ par le compresseur (11) à partir du débit massique $\dot{m}_{rcpr}$,

   procédé dans lequel les étapes (a) à (c) sont effectuées avant que l'organe (12) de détente ne débite du fluide réfrigérant.

2. Procédé selon la revendication 1, dans lequel les étapes (a) à (c) sont effectuées pendant une durée $T_0$ de l'ordre de quelques secondes, de préférence de l'ordre de trois secondes.

3. Procédé selon la revendication 1, comprenant une étape préalable consistant à comparer, après démarrage de l'installation de climatisation, la valeur $HP(t)$ de la pression du fluide réfrigérant dans le circuit haute pression à la valeur $HP(t - \delta t)$ au démarrage de l'installation, et à effectuer les étapes (a) à (c) à partir d'un instant initial $t_s$ pour lequel la différence $HP(t_s)-HP(t_s - \delta t)$ est supérieure à un seuil donné $\Delta HP_0$.

4. Procédé selon la revendication 3, dans lequel les étapes (a) à (c) sont effectuées pendant une durée donnée $T_0$ après ledit instant initial $t_s$.

5. Procédé selon la revendication 4, dans lequel les étapes (a) à (c) sont effectuées pendant la durée $T_0$ par pas temporel $\delta t$ de mesure.

6. Procédé selon l'une quelconque des revendications 1 à 5, dans lequel la variation $\delta\dot{m}_r$ du débit massique est reliée à la dérivée $dHP/dt$ par la relation : $\delta\dot{m}_r = A.dHP/dt$, où $A = V_{HP}/RT$, $V_{HP}$ et $T$ étant le volume et la température du circuit haute pression, et $R$ une constante du fluide réfrigérant.

7. Procédé selon l'une quelconque des revendications 1 à 6, dans lequel la puissance $\dot{W}_{sh}$ absorbée par le compresseur (11) est reliée au débit massique $\dot{m}_{rcpr}$ par la relation : $W_{sh} = a.\dot{m}_{rcpr}.W_{is} + b.N$, où $W_{is}$ est le travail de compression isentropique du compresseur, $N$ la vitesse de rotation du compresseur, et $a$ et $b$ des paramètres caractéristiques du compresseur.

**8.** Installation de climatisation configurée pour mettre en oeuvre le procédé d'estimation de la puissance $\dot{W}_{sh}$ absorbée par un compresseur selon l'une quelconque des revendications précédentes, ladite installation de climatisation comprenant un capteur (14) de mesure de la haute pression *HP* disposé à l'entrée d'un refroidisseur (13) de gaz, le refroidisseur permettant un échange thermique avec un flux d'air extérieur, un tel capteur rendant apte la détermination de la valeur $\delta\dot{m}_r$ de la variation correspondante du débit massique du fluide réfrigérant dans le circuit haute pression.

**Patentansprüche**

**1.** Verfahren zum Schätzen der Leistung $\dot{W}_{sh}$, die von einem Kühlflüssigkeitskompressor (11) beim Anlauf einer Klimaanlage absorbiert wird, wobei die Anlage einen sogenannten Hochdruckkreislauf umfasst, der zwischen dem Ausgang des Kompressors (11) und dem Eingang eines Entspannungsorgans (12) der Kühlflüssigkeit liegt, **dadurch gekennzeichnet, dass** das Verfahren die Schritte umfasst, die, nach dem Anlauf der Klimaanlage, aus Folgendem bestehen:

(a) Berechnen des Differenzials *dHP/dt* der Variationen des Drucks *HP* der Kühlflüssigkeit in dem Hochdruckkreislauf, und davon Ableiten eines Werts $\delta\dot{m}$ der entsprechenden Variation des Mengendurchflusses der Kühlflüssigkeit in dem Hochdruckkreislauf,

(b) Schätzen des Mengendurchflusses $\dot{m}_{r\,exp}$ der Kühlflüssigkeit in dem Entspannungsorgan (12) und davon Ableiten des Mengendurchflusses $\dot{m}_{rcpr}$ der Kühlflüssigkeit in dem Kompressor (11) durch die Gleichung: $\dot{m}_{rcpr}=\dot{m}_{r\,exp}+\delta\dot{m}$,

(c) Schätzen der Leistung $\dot{W}_{sh}$, die von dem Kompressor (11) absorbiert wird, ausgehend von dem Mengendurchfluss $\dot{m}_{rcpr}$,

Verfahren, bei dem die Schritte (a) bis (c) ausgeführt werden, bevor das Entspannungsorgan (12) Kühlflüssigkeit abgibt.

**2.** Verfahren nach Anspruch 1, bei dem die Schritte (a) bis (c) während einer Zeitdauer $T_0$ in der Größenordnung von einigen Sekunden, vorzugsweise in der Größenordnung von drei Sekunden, ausgeführt werden.

**3.** Verfahren nach Anspruch 1, das einen vorausgehenden Schritt umfasst, der darin besteht, nach dem Starten der Klimaanlage den Wert *HP(t)* des Drucks der Kühlflüssigkeit in dem Hochdruckkreislauf mit dem Wert *HP(t-δt)* beim Anlauf der Anlage zu vergleichen und die Schritte (a) bis (c) ausgehend von dem Anfangsaugenblick $t_s$, für den die Differenz *HP(t$_s$)- HP(t$_s$-δt)* größer ist als ein gegebener Schwellenwert $\Delta HP_0$, auszuführen.

**4.** Verfahren nach Anspruch 3, bei dem die Schritte (a) bis (c) während einer gegebenen Zeitdauer $T_0$ nach dem Anfangsaugenblick $t_s$ ausgeführt werden.

**5.** Verfahren nach Anspruch 4, bei dem die Schritte (a) bis (c) während der Zeitdauer $T_0$ in Messzeitschritten $\delta t$ ausgeführt werden.

**6.** Verfahren nach einem der Ansprüche 1 bis 5, bei dem die Variation $\delta\dot{m}_r$ des Mengendurchflusses mit der Ableitung *dHP/dt* durch die Gleichung $\delta m_r=A.dHP/dt$ verbunden ist, wobei $A=V_{HP}/RT$, $V_{HP}$ und *T* das Volumen und die Temperatur des Hochdruckkreislaufes sind und *R* eine Konstante der Kühlflüssigkeit ist.

**7.** Verfahren nach einem der Ansprüche 1 bis 6, bei dem die Leistung $\dot{W}_{sh}$, die von dem Kompressor (11) absorbiert wird, mit dem Mengendurchfluss $\dot{m}_{rcpr}$ durch die Gleichung: $\dot{W}_{sh}=a.\dot{m}_{rcpr}W_{is} + b.N$ verbunden ist, wobei $W_{is}$ die isentropische Kompressionsarbeit des Kompressors ist, *N* die Drehzahl des Kompressors ist, und *a* und *b* charakteristische Parameter des Kompressors sind.

**8.** Klimaanlage, die ausgelegt ist, um das Schätzungsverfahren der Leistung. $\dot{W}_{sh}$, die von einem Kompressor nach einem der vorhergehenden Ansprüche absorbiert wird, umzusetzen, wobei die Klimaanlage einen Sensor (14) zum Messen des Hochdrucks *HP* umfasst, der an dem Eingang eines Gaskühlers (13) angeordnet ist, wobei der Kühler einen Wärmeaustausch mit einem Außenluftstrom erlaubt, wobei ein solcher Sensor die Bestimmung des Werts $\delta\dot{m}_r$ der entsprechenden Variation des Mengendurchflusses der Kühlflüssigkeit in dem Hochdruckkreislauf geeignet macht.

**Claims**

1. Method for estimating the power $\dot{W}_{sh}$ absorbed by a compressor (11) of refrigerant on starting up an air-conditioning installation, said installation comprising a so-called high-pressure circuit situated between the outlet of the compressor (11) and the inlet of an expansion member (12) for the refrigerant, **characterized in that** said method comprises the steps consisting, after starting up the air-conditioning installation, in:

   (a) computing the derivative **dHP/dt** of the variations of the pressure *HP* of the refrigerant in the high-pressure circuit, and deducing therefrom a value $\delta \dot{m}_r$ of the corresponding variation of the mass flow rate of the refrigerant in the high-pressure circuit,
   (b) estimating the mass flow rate $\dot{m}_{r\,exp}$ of the refrigerant in said expansion member (12), and deducing therefrom the mass flow rate $\dot{m}_{r\,exp}$ of the refrigerant in the compressor (11) by the relationship:

$$\dot{m}_{rcpr} = \dot{m}_{r\,exp} + \delta\,\dot{m}_r\,,$$

   (c) estimating the power absorbed $\dot{W}_{sh}$ by the compressor (11) from the mass flow rate $\dot{m}_{rcpr}$,

   method in which the steps (a) to (c) are performed before the expansion member (12) outputs refrigerant.

2. Method according to Claim 1, in which the steps (a) to (c) are performed for a duration $T_0$ of the order of a few seconds, preferably of the order of three seconds.

3. Method according to Claim 1, comprising a preliminary step consisting in comparing, after starting up the air-conditioning installation, the value **HP(t)** of the pressure of the refrigerant in the high-pressure circuit to the value **HP(t-$\delta$t)** on starting up the installation, and in performing the steps (a) to (c) from an initial instant $t_s$ for which the difference **HP(t$_s$)- HP(t$_s$-$\delta$t)** is above a given threshold $\Delta$**HP$_0$**.

4. Method according to Claim 3, in which the steps (a) to (c) are performed for a given duration $T_0$ after said initial instant $t_s$.

5. Method according to Claim 4, in which the steps (a) to (c) are performed for the duration $T_0$ for each measurement time step $\delta$t.

6. Method according to any one of Claims 1 to 5, in which the variation $\delta\,\dot{m}_r$ of the mass flow rate is linked to the derivative **dHP/dt** by the relationship: $\delta\,\dot{m}_r$=**A.dH/dt,** where **A=V$_{HP}$/RT, V$_{HP}$** and **T** being the volume and the temperature of the high-pressure circuit, and **R** being the constant of the refrigerant.

7. Method according to any one of Claims 1 to 6, in which the power $\dot{W}_{sh}$ absorbed by the compressor (11) is linked to the mass flow $\dot{m}_{rcpr}$ by the relationship: **W$_{sh}$=a.$\dot{m}_{rcpr}$.W$_{is}$+b.N,** where **W$_{is}$** is the isentropic compression work of the compressor, **N** is the speed of rotation of the compressor, and **a** and **b** are parameters characteristic of the compressor.

8. Air-conditioning installation, configured to implement the method for estimating the power $\dot{W}_{sh}$ absorbed by a compressor according to any one of the preceding claims, said air-conditioning installation comprising a sensor (14) for measuring the high pressure *HP*, positioned at the inlet of a gas cooler (13), the cooler allowing for a heat exchange with an external air flow, such a sensor rendering the determination of the value $\delta\dot{m}_r$ of the corresponding variation of the mass flow rate of the refrigerant in the high-pressure circuit appropriate.

**Fig. 1**

**Fig. 3**

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2840259

**Littérature non-brevet citée dans la description**

- **HABERSCHILL et al.** *INTERNATIONAL JOURNAL OF REFRIGERATION,* Mai 2007, 732-743